# EUROPEAN PATENT APPLICATION

(11) **EP 1 959 450 A1**
(43) Date of publication of application: **20.08.2008**
(21) Application number: 06822705.7
(22) Date of filing: 31.10.2006
(51) Int. Cl.: G11B 27/10, G11B 20/10, G11B 27/00

(54) **REPRODUCTION DEVICE**

(30) Priority: 30.11.2005 JP 2005346433; 30.01.2006 JP 2006021250
(71) Applicant: ADC Technology Inc., Aichi 460-0003 (JP)
(72) Inventor: MURASHIGE, Kazuhisa, Aichi 478-0041 (JP)
(74) Representative: Vogler, Bernd
(86) International application number: PCT/JP2006/321776
(87) International publication number: WO 2007/063670

(57) **Abstract**

Provided is a reproducing apparatus for reproducing moving image information stored in a storage medium. In response to an externally supplied skip command, the reproduction device extracts a feature parameter of image or sound from the moving image information being reproduced, and stores the extracted feature parameter in a storage device. The reproducing apparatus detects a feature parameter coinciding with the feature parameter stored in the storage device, from the moving image information stored in the storage medium, and inhibits reproduction of the moving image information for a set time which contains the detected feature parameter.

## Description

### TECHNICAL FIELD

This invention relates to a reproducing apparatus that reproduces moving image information and an information sharing system that includes a plurality of the reproducing apparatus.

### BACKGROUND ART

Heretofore, there are known apparatus which record moving image information provided by television broadcasts or the like (i.e., picture data and sound data) on a storage medium such as a hard disk, a DVD-RW, etc. to reproduce the recorded moving image information.

Some of these apparatus have a plurality of reproduction modes such as a fast-forward reproduction mode, a fast-rewind reproduction mode, a slow reproduction mode, etc. Some have a skip function in which, in response to a command externally supplied during reproduction of the recorded moving image information, the moving image information is not reproduced for a prescribed time and the subsequent moving image information is reproduced, that is to say, the moving image information is skipped for the prescribed time. Others of these apparatus have a commercial skip function that detects a commercial contained in the moving image information so as not to reproduce the detected commercial, that is to say, to skip the commercial.

As to the apparatus with a commercial skip function, a recording and reproducing apparatus is proposed which divides provided picture information into a plurality of chapters, each of which includes a main program or a commercial. Furthermore, information indicating a commercial type is added to a commercial chapter. Thereafter, the plurality of chapters are recorded in a storage medium, so that only a main program chapter without commercial information can be reproduced or only commercial information of a specific type can be reproduced, in response to an externally supplied command (see Patent Document 1, etc., for example).

Patent Document 1: Unexamined Japanese Patent Publication No. 2005-71417.

### DISCLOSURE OF THE INVENTION

### PROBLEMS TO BE SOLVED BY THE INVENTION

However, in the proposed recording and reproducing apparatus as mentioned above, commercial information of a specific type can be reproduced by a user. However, since commercial information of a specific type includes both commercial desired and undesired by the user, a commercial undesired by the user is also reproduced. For this reason, when such a commercial is reproduced, the user has to supply a command to fast-forward or skip a commercial by using a remote controller or the like. Also, since the same commercial is often broadcast repeatedly in a program, the user needs to repeat the same operation every time the same commercial is reproduced.

An object of the present invention, which was made in view of the above problem, is to provide a reproducing apparatus that can reproduce only a content desired by a user without repeated supply of a command by the user, and an information sharing system including such reproducing apparatus.

### MEANS TO SOLVE THE PROBLEMS

The invention set forth in claim 1 which was made to solve the above problem is a reproducing apparatus including: a reproducing device that reads moving image information containing images and sounds from a storage medium storing the moving image information, decompresses signals which can be reproduced as images and sounds in the moving image information, and reproduces the decompressed signals; and a reproduction control device that moves a reproduction position, that is a reading position in the storage medium of the reproducing device, to a reading position storing the moving image information a predetermined set time ahead, in response to a skip command externally supplied during reproduction of the moving image information by the reproducing device. The reproducing apparatus further includes: a first parameter storing device that, in response to the skip command externally supplied, extracts a feature parameter of image or sound from the moving image information being reproduced by the reproducing device upon supply of the skip command, and stores the extracted feature parameter in a storage device; an inhibition position specifying device that detects a feature parameter coinciding with the feature parameter stored in the storage device by the first parameter storing device, from the moving image information stored in the storage medium, and specifies a reading position in the storage medium where the coinciding feature parameter is detected, as an inhibition position; and a reproduction inhibiting device that inhibits reproduction by the reproducing device of the moving image information for the set time which contains the feature parameter, based on the inhibition position specified by the inhibition position specifying device.

Thus, in the reproducing apparatus of the present invention, in response to the skip command externally supplied, the first parameter storing device extracts the feature parameter of image or sound from the moving image information being reproduced by the reproducing device to store the extracted feature parameter in the storage device. The inhibition position specifying device detects a feature parameter coinciding with the feature parameter stored in the storage device by the first parameter storing device, from the moving image information stored in the storage medium, and specifies, as an inhibition position, a reading position in the storage medium where the coinciding feature parameter is detected. Also, the reproduction inhibiting device inhibits reproduction by the reproducing device of the moving image information for the set time which contains the feature parameter, based on the inhibition position detected by the inhibition position specifying device.

Therefore, according to the reproducing apparatus of the present invention, in response to the skip command externally supplied, the feature parameter of image or sound is extracted from moving image information being reproduced upon supply of the skip command to be stored in the storage device. When a feature parameter coinciding with this feature parameter is detected from the moving image information, reproduction of the moving image information for the set time which contains the feature parameter is inhibited based on the reading position where the feature parameter is detected.

Accordingly, for example, when moving image information unnecessary to be viewed (such as a commercial, etc.) is reproduced, a user supplies a skip command to move a reproduction position to a reading position storing the moving image information after a set time (that is to say, skip the moving image information for a set time). Reproduction of the same moving image information (that is to say, the same commercial) is inhibited. Therefore, the user can view only a desired content without repeatedly supplying a skip command.

In the invention set forth in claim 2, the reproduction inhibiting device in the reproducing apparatus set forth in claim 1 outputs the skip command to the reproduction control device when the reproduction position by the reproducing device of the moving image information coincides with the inhibition position, so as to inhibit reproduction of the moving image information for a set time.

Therefore, according to the reproducing apparatus set forth in claim 2, the moving image information is skipped for the set time when the reproduction position of the moving image information coincides with the inhibition position, that is to say, when a feature parameter coinciding with the feature parameter stored in the storage medium is detected from the moving image information. Accordingly, the moving image information for the set time which contains a feature parameter coinciding with the feature parameter extracted upon supply of the skip command, that is to say, the same moving image information as the once skipped moving image information, is no longer reproduced. In this way, a user can view only desired contents without repeatedly supplying a skip command.

In the invention set forth in claim 3, the reproduction inhibiting device in the reproducing apparatus set forth in claim 1 deletes the moving image information for the set time which contains a feature parameter, from the moving image information stored in the storage medium, based on the inhibition position and the set time.

Therefore, according to the reproducing apparatus set forth in claim 3, when a feature parameter coinciding with the feature parameter stored in the storage medium is detected in the moving image information, the moving image information for the set time which contains the feature parameter is automatically deleted. Accordingly, the same moving image information as the once skipped moving image information is no longer reproduced. In this way, a user can view only desired contents without repeatedly supplying a skip command.

In the invention set forth in claim 4, the reproducing apparatus set forth in one of claims 1 to 3 includes a first inhibition position specifying device as the inhibition position specifying device. The first inhibition position specifying device detects a feature parameter coinciding with the feature parameter stored in the storage device by the first parameter storing device from the moving image information being reproduced, to specify the inhibition position.

Therefore, according to the reproducing apparatus set forth in claim 4, the inhibition position is specified while the moving image information is being reproduced. Accordingly, the once skipped moving image information is no longer reproduced immediately after a user supplies a skip command. In this way, the user can view only desired contents without repeatedly supplying a skip command.

In the invention set forth in claim 5, the first inhibition position specifying device in the reproducing apparatus set forth in claim 4 stores the specified inhibition position in the storage device, and further stores a reading position in the storage medium of the feature parameter extracted by the first parameter storing device as the inhibition position in the storage device.

Therefore, according to the reproducing apparatus set forth in claim 5, both the reading position of the feature parameter extracted from the moving image information being reproduced upon supply of the skip command, and the reading position storing a feature parameter coinciding with the extracted feature parameter, are stored in the storage device as inhibition positions. Accordingly, a user can easily recognize reading positions of the moving image information which should be inhibited from being reproduced.

In the invention set forth in claim 6, the reproducing apparatus set forth in claim 4 or 5 includes a second inhibition position specifying device as the inhibition position specifying device, in addition to the first inhibition position specifying device. The second inhibition position specifying device detects a feature parameter coinciding with the feature parameter stored in the storage device by the first parameter storing device, from the moving image information stored in the storage medium and not being reproduced by the reproducing device, to specify the inhibition position, and then stores the specified inhibition position in the storage medium. The first inhibition position specifying device performs detection only to the feature parameters to which detection of the feature parameter coinciding with the feature parameter stored in the storage device is not performed by the second inhibition position specifying device.

Therefore, according to the reproducing apparatus set forth in claim 6, the reading position storing a feature parameter coinciding with the feature parameter stored in the storage device is stored in the storage device as an inhibition position, from the moving image information not being reproduced by the reproducing device. Upon reproduction of the moving image information, detection is performed to the feature parameters to which detection by the second inhibition position specifying device of the feature parameter coinciding with the feature parameter stored in the storage device is not performed, that is to say, only to newly stored feature parameters. Accordingly, processing loads can be reduced in comparison with a case in which the process of detecting the feature parameter coinciding with the feature parameter stored in the storage device is performed to each of all the feature parameters stored in the storage device upon reproduction of the moving image information.

In the invention set forth in claim 7, the reproducing apparatus set forth in one of claims 1 to 5 includes a second position specifying device as the inhibition position specifying device. The second inhibition position specifying device detects a feature parameter coinciding with the feature parameter stored in the storage device by the first parameter storing device, from the moving image information stored in the storage medium and not being reproduced by the reproducing device, to specify the inhibition position, and then stores the specified inhibition position in the storage medium.

Therefore, according to the reproducing apparatus set forth in claim 7, the inhibition position is detected from the moving image information not being reproduced and then stored in the storage device based on the feature parameter. Accordingly, it is possible not to reproduce moving image information coinciding with the moving image information for the set time which is once skipped upon viewing, when the moving image information stored in this storage medium is viewed.

In the invention set forth in claim 8, the reproduction inhibiting device in the reproducing apparatus set forth in claim 7 deletes the moving image information for the set time which contains the feature parameter from the moving image information stored in the storage medium based on the inhibition position and the set time, when the inhibition position is stored by the second inhibition position specifying device.

Therefore, according to the reproducing apparatus set forth in claim 8, the moving image information coinciding with the moving image information for the set time which is once skipped upon viewing is automatically deleted from the moving image information stored in the storage medium. In other words, moving image information for a set time which is once skipped upon viewing is deleted also from the unviewed moving image information stored in the storage medium. Accordingly, a user can view only desired contents without supplying a skip command even if the moving image information is viewed for the first time.

In the invention set forth in claim 9, the inhibition position specifying device in the reproducing apparatus set forth in claim 2 stores the detected inhibition position in the storage device, and also stores a reading position in the storage medium of the feature parameter stored by the first parameter storing device as the inhibition position in the storage device. Furthermore, a moving image information editing device deletes the moving image information for the set time which contains a feature parameter from the moving image information stored in the storage medium based on the inhibition position stored in the storage device by the inhibition position specifying device and the set time.

Therefore, according to the reproducing apparatus set forth in claim 9, the moving image information for the set time which contains a feature parameter is skipped during reproduction of the moving image information. Also, the reading position of the moving image information being reproduced upon supply of a skip command, that is to say, the moving image information which contains a feature parameter, and the reading position storing the moving image information which contains a feature parameter coinciding with the feature parameter stored in response to supply of the skip command, are stored as the inhibition positions in the storage device during reproduction of the moving image information. Then, the moving image information for the set time which contains feature parameters stored in the inhibition position is deleted from the moving image information. Accordingly, the once skipped moving image information for the set time and the moving image information coinciding with this moving image information can be automatically deleted.

In the invention set forth in claim 10, the reproduction control device in the reproducing apparatus set forth in one of claims 1 to 9 moves the reproduction position in accordance with a moving command externally supplied during reproduction of the moving image information. When the reproduction control device moves the reproduction position in response to the skip command and then moves the reproduction position in response to the moving command within a predetermined reference time, a time calculation device calculates an inhibition time for which reproduction of the moving image information is inhibited, based on a moving amount of the reproduction position by the reproduction control device and the set time.

When the inhibition time is calculated by the time calculation device, the first parameter storing device stores the inhibition time calculated by the time calculation device together with the feature parameter in the storage device. In case that the inhibition time is stored together with the feature parameter, the reproduction inhibiting device inhibits reproduction by the reproducing device of the moving image information for the inhibition time, instead of for the set time.

Therefore, according to the reproducing apparatus set forth in claim 10, the inhibition time for which reproduction of the moving image information should be actually inhibited is calculated in response to the moving command supplied after the skip command. Since reproduction of the moving image information is inhibited for this inhibition time, a time range of the moving image information undesired by a user can be precisely detected, and reproduction of the undesired moving image information can be inhibited.

In the invention of claim 11, the feature parameter, in the reproducing apparatus set forth in one of claims 1 to 10, is image information which constitutes the moving image information. According to the reproducing apparatus set forth in claim 11, the inhibition position can be specified by detecting image information coinciding with the image information stored in the storage device as the feature parameter from the moving image information.

In the invention of claim 12, the feature parameter, in the reproducing apparatus set forth in one of claims 1 to 10, is a series of a plurality of image information which constitute the moving image information. According to the reproducing apparatus set forth in claim 12, the inhibition position can be specified by detecting moving image information coinciding with the series of a plurality of image information, that is, moving image information coinciding with the moving image information of a certain duration of time, stored in the storage device as the feature parameter.

In the invention set forth in claim 13, as a result that part of the image information coincides with part of the image information stored as the feature parameter, the inhibition position specifying device, in the reproducing apparatus set forth in claim 11 or 12, detects image information, part of which coincides with part of the image information stored as the feature parameter.

Therefore, according to the reproducing apparatus set forth in claim 13, in a case where, for example, part of the image information stored as the feature parameter includes the image information of a specific mark or the like, the inhibition position can be specified by detecting image information coinciding with the image information of the specific mark. Accordingly, reproduction of the moving image information for the set time which includes the same mark can be inhibited.

In the invention set forth in claim 14, the feature parameter in the reproducing apparatus set forth in one of claims 1 to 10 is sound information for a prescribed time which constitutes the moving image information. According to the reproducing apparatus set forth in claim 14, the inhibition position can be specified by detecting sound information coinciding with the sound information for the set time stored in the storage device as the feature parameter from the moving image information.

In the invention set forth in claim 15, a deletion device in the reproducing apparatus set forth in one of claims 1 to 14 deletes the feature parameter stored in the storage device.

Therefore, according to the reproducing apparatus set forth in claim 15, since the feature parameter stored in the storage device is deleted by the deletion device, a situation can be avoided in which enormous amounts of feature parameters are stored in the storage device thereby to exceed a memory capacity of the storage device.

In the invention set forth in claim 16, a time changing device in the reproducing apparatus set forth in one of claims 1 to 15 changes the set time in response to a command externally supplied.

Therefore, according to the reproducing apparatus set forth in claim 16, the set time, that is, a time for which reproduction of the moving image information is inhibited, can be freely changed by a command externally supplied. For example, only the commercial undesired by a user can be inhibited from being reproduced, by adjusting a time for which reproduction is inhibited to a length of the commercial (e.g. 15 seconds, 30 seconds, etc.).

In the invention set forth in claim 17, the time changing device in the reproducing apparatus set forth in claim 16 includes a plurality of time options in advance. The time changing device is capable of selecting one of the plurality of time options according to a command externally supplied.

Therefore, according to the invention set forth in claim 17, the set time can be conveniently changed without difficulty according to preference from a plurality of predetermined time options by a command externally supplied.

In the invention set forth in claim 18, a communication device that communicates with external apparatus is provided in the reproducing apparatus set forth in one of claims 1 to 17. When an image storage command to store an image in the storage device is externally supplied, a second parameter storing device obtains image information or sound information from the external apparatus via the communication device, and stores the obtained information in the storage device as the feature parameter.

Therefore, according to the reproducing apparatus set forth in claim 18, reproduction of the moving image information for the set time which contains feature parameter of the image information or the sound information obtained from the external apparatus as the feature parameter can be also inhibited.

The invention set forth in claim 19 is an information sharing system including a plurality of reproducing apparatus set forth in claim 18. Each of the plurality of reproducing apparatus can communicate with each other via the communication device of each reproducing apparatus. At least one of the plurality of reproducing apparatus includes an image transmitting device that transmits the feature parameter stored in the storage device to at least one of the other reproducing apparatus belonging to the information communication system via the communication device together with the image storage command.

Therefore, according to the information sharing system set forth in claim 19, the moving image information which is inhibited from being reproduced in at least one of the plurality of reproducing apparatus can be also inhibited from being reproduced in the other reproducing apparatus.

### BRIEF DESCRIPTION OF THE DRAWINGS

FIG. 1 is a block diagram showing a schematic constitution of a recording and reproducing apparatus 1 of a first embodiment.
FIG. 2 is a flowchart illustrating a skip time setting process of the first embodiment.
FIG. 3 is a flowchart illustrating a reproduction management process of the first embodiment.
FIG. 4 is a schematic diagram showing an overall information sharing system of a second embodiment.
FIG. 5 is a flowchart for explaining operation of an image determiner 94.
FIG. 6 is a flowchart illustrating a main routine executed by a controller 95 of the second embodiment.
FIG. 7 is a flowchart illustrating a reproduction management process of the second embodiment.
FIG. 8 is a flowchart illustrating a skip image acquisition process of the second embodiment.
FIG. 9 is a flowchart illustrating an external command process of the second embodiment.
FIG. 10 is a flowchart illustrating a skip image detection process of the second embodiment.
FIG. 11 is a flowchart illustrating a skip image deletion process of the second embodiment.

### EXPLANATION OF REFERENCE NUMERALS

1...recording and reproducing apparatus, 2...internet, 10...tuner, 12...encoder unit, 14...hard disk (HDD), 16...disk drive, 20...image output unit, 22...sound output unit, 24...decoder unit, 28...remote control sensor, 30...remote controller, 32...operating unit, 34...buffer, 40...image determiner, 40a...skip image region, 50...controller, 70...display device, 80...speaker, 90...recording and reproducing apparatus, 92...communication unit, 93...notification unit, 94...image determiner, 94a...skip image region, 95...controller

### BEST MODE FOR CARRYING OUT THE INVENTION

Embodiments of the present invention will be explained hereafter, by way of drawings.

### [First Embodiment]

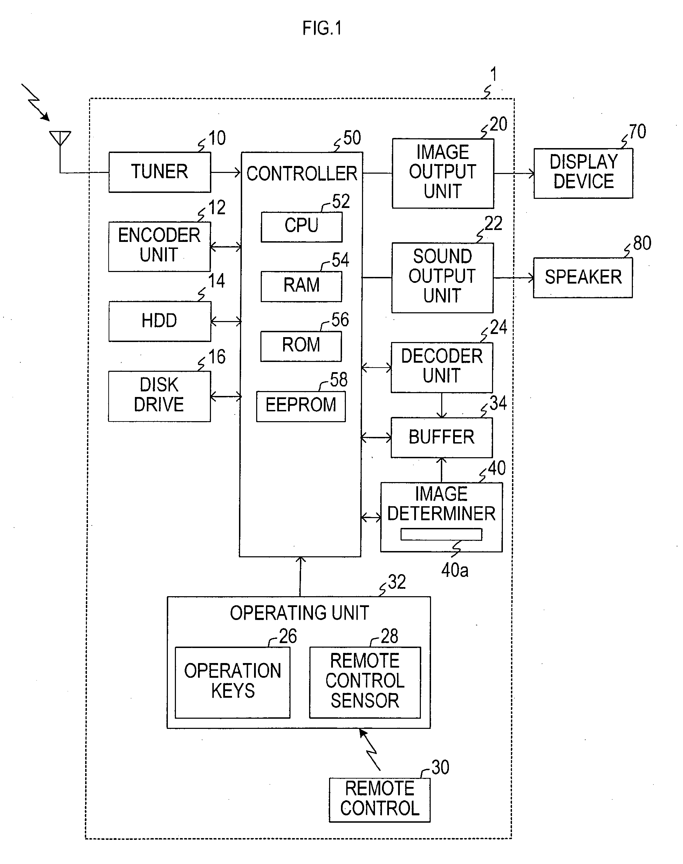

FIG. 1 is a block diagram showing a constitution of a recording and reproducing apparatus 1 of a first embodiment.

The recording and reproducing apparatus 1 of the first embodiment records television broadcast signals (hereinafter, also referred to as "broadcast signals") received via an antenna on a storage medium such as a hard disk 14 (hereinafter, referred to as a "HDD 14"), a DVD, etc., and reads and reproduces the broadcast signals (i.e., prerecorded data) recorded on the storage medium according to a command supplied by a user.

The recording and reproducing apparatus 1 includes a tuner 10 that tunes a predetermined broadcast signal out of the broadcast signals received via the antenna to demodulate the tuned signal; an encoder unit 12 that converts the broadcast signal demodulated by the tuner 10 to prerecorded data of a predetermined format (e.g., MPEG format); a HDD 14 as a mass storage medium on which the prerecorded data converted by the encoder unit 12, etc. is recorded; a disk drive 16 that executes reading and writing of data to a storage medium such as a DVD, etc.; an image output unit 20 that outputs an image to a display device 70 such as a TV monitor for displaying pictures, etc.; a sound output unit 22 that outputs sounds to a speaker 80; a decoder unit 24 that decodes the broadcast signal converted by the MPEG format; an operating unit 32 for a user to supply various commands; a buffer 34 for temporarily storing image data to be supplied to the image output unit 20; an image determiner 40 that determines whether the image stored in the buffer 34 coincides with a later-described skip image; and a controller 50 that controls the above respective components to record the prerecorded data on the HDD 14 or a DVD and reproduce the prerecorded data stored in the HDD 14 or the DVD.

The encoder unit 12 converts the broadcast signal outputted from the tuner 10 to data in the MPEG format and supplies the information upon conversion to the controller 50.

The decoder unit 24 divides the supplied data into image data and sound data and decodes each divided data to be supplied to the buffer 34.

The operating unit 32 includes various operation keys 26 provided on the recording and reproducing apparatus 1; and a remote control sensor 28 that receives a transmission signal from a remote control (hereinafter, also referred to as a remote) 30.

The buffer 34 is constituted of a rewritable memory. The buffer 34 includes a region which can store image data and sound data having a prescribed duration of time (e.g., 3 seconds). The image data and sound data decoded by the decoder unit 24 are stored in the region for the prescribed duration of time. For example image data is stored in the buffer 34 for 2 seconds before supplied to the image output unit 20 and one second after supplied to the image output unit 20.

The image determiner 40 includes a region (hereinafter, also referred to as a skip image region 40a) where image data for a plurality of pictures can be stored. The image determiner 40 starts to operate when a command to start operation is supplied from the controller 50, and compares image data (hereinafter, also referred to as an input image) stored in a prescribed region of the buffer 34, that is to say, the input image to be supplied to the image output unit 20 and displayed on the display device 70, and a skip image stored in the skip image region 40a (image data stored in the skip image region 40a by a later-described reproduction management process executed in the controller 50), so as to determine whether the input image and the skip image coincide with each other.

When it is determined that the images coincide, that is to say, when the same image as the skip image is detected from the input images to be displayed on the display device 70, a control signal representing detection of the same image as the skip image is supplied to the controller 50. Determination on whether or not the two images coincide with each other is performed by comparing all pixels or part of the pixels (e.g., pixels on diagonal lines) forming the images. Since various methods for such image recognition have been used as well-known techniques, details of the image recognition process are omitted.

The controller 50 is made of a known microcomputer including a CPU 52, a RAM 54, a ROM 56, an EEPROM 58 as a rewritable non-volatile memory, etc. The controller 50 is also provided with a timer to measure a reproducing time of prerecorded data. The CPU 52 executes various processes such as a recording process, a reproducing process, a reproduction management process, etc., based on programs stored in the RAM 54 and the ROM 56.

Now, explanation will be given on prerecorded data recorded on a storage medium such as the HDD 14 or a DVD, etc. Prerecorded data is constituted of reproduction information including picture data and sound data converted by the MPEG format by the encoder unit 12, and management information for managing the reproduction information.

The reproduction information includes prerecorded data made of a series of moving image information and recorded as a video object (VOB). Here, a VOB is constituted from a plurality of video object units (VOBU) in which video packs, audio packs, etc. respectively including picture data, sound data, etc. compressed by the MPEG format are randomly arranged.

The management information includes a number of VOB (i.e., a number of prerecorded data) recorded on the storage medium, a recording position on the storage medium of each VOB, etc. Information is also included on data size of each VOBU constituting each VOB, reproducing time of each VOBU (hereinafter, also referred to as time map information), etc. Moreover, prerecording information is also included which relates to prerecorded data such as date and time when recording of the prerecorded data is started and finished, prerecorded channel, etc.

Now explanation is given on various processes executed by the controller 50.

When a recording command to record a prescribed television broadcast signal is supplied by a user, the controller 50 executes a recording process that converts the broadcast signal received by the tuner 10 to prerecorded data to be stored on the storage medium.

More particularly, when a recording command is supplied via the operating unit 32, the controller 50 supplies the broadcast signal received, tuned, and demodulated by the tuner 10 to the encoder unit 12. Subsequently, the controller 50 generates the aforementioned management information based on the information upon conversion supplied from the encoder unit 12, and records the generated management information and the reproduction information converted to the MPEG format by the encoder unit 12 on the HDD 14 as prerecorded data.

Also, when a write command to a DVD is supplied via the operating unit 32, the controller 50 records the prerecorded data once recorded on the HDD 14 based on the supplied command to the DVD via the disk drive 16 in a prescribed format.

When a command to reproduce the prerecorded data is externally supplied, the controller 50 executes a reproduction process for reproducing the prerecorded data stored on the storage medium, as a process corresponding to the reproducing device of the present invention.

More particularly, when a command to reproduce the prerecorded data is supplied via the operating unit 32, the controller 50 reads the management information recorded on the storage medium such as the HDD 14 or a DVD, etc., and displays a list of reproducible prerecorded data on the display device 70 based on the read management information. Subsequently, when the prerecorded data is selected via the operating unit 32, the controller 50 extracts the selected prerecorded data from the reproduction information to supply the selected prerecorded data to the decoder unit 24.

The controller 50 sequentially reads data decoded by the decoder unit 24 and stored in the buffer 34, and supplies the data to the image output unit 20 and the sound output unit 22 to display images on the display device 70 and output sounds from the speaker 80.

As processes characteristic to the recording and reproducing apparatus 1 of the first embodiment, the controller 50 executes a reproduction management process that moves a reading position in the storage medium of prerecorded data (i.e., reproducing position) to a reading position which records the prerecorded data a predetermined skip time ahead (that is to say, skips prerecorded data for the skip time) during reproduction of the prerecorded data, as well as a skip time setting process for setting the skip time to be used in the reproduction management process based on input externally supplied.

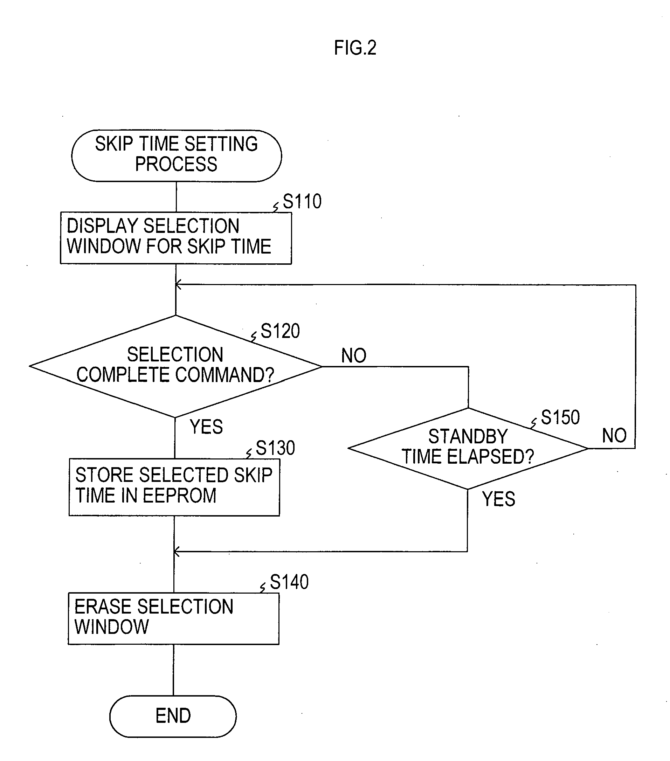

Firstly, explanation on the skip time setting process is given by way of FIG. 2. FIG. 2 is a flowchart illustrating the skip time setting process.

The skip time setting process is started in response to a skip time setting command supplied via the operating unit 32. Firstly in S110, a selection window for the skip time is displayed on the display device 70 via the image output unit 20 based on the information stored in the ROM 56, etc. Here, the selection window is a window on which a plurality of time lengths such as 15 seconds, 30 seconds, 45 seconds, 60 seconds, etc. are displayed as options for the skip time of the prerecorded data, and also a window on which one of these options is selectable via the operating unit 32.

In subsequent S120, it is determined whether or not a selection complete command is supplied via the operating unit 32. When a selection complete command is supplied (S120: YES), the process moves to S130 and the option (e.g., 30 seconds) selected on the selection window by the user is stored in the EEPROM 58 as the skip time. The process moves to S140.

On the other hand, if it is determined in S120 that a selection complete command is not supplied (S120: NO), the process moves to S150 and it is determined whether a predetermined standby time has elapsed since display of the selection window. When it is determined that the standby time has not elapsed (S150: NO), the process moves to S120 to repeat the steps from S120. When it is determined that the standby time has elapsed (S150: YES), the process moves to S140.

In S140, the selection window is erased from the display device 70 and the present process is ended.

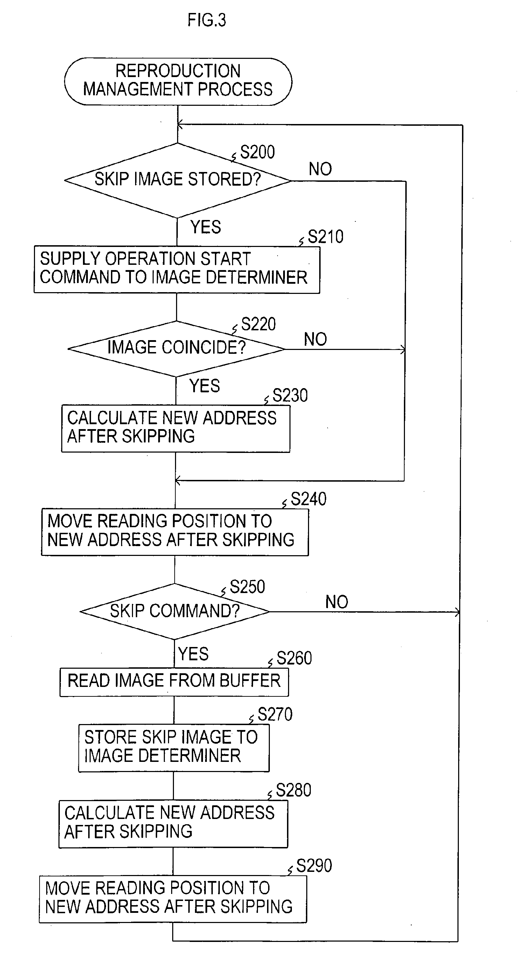

Now, explanation is given on the reproduction management process by way of FIG. 3. FIG. 3 is a flowchart illustrating the reproduction management process.

The reproduction management process is a process started as reproduction of prerecorded data is started in the reproduction process, and is repeatedly executed in parallel to the reproduction process until reproduction of the prerecorded data is completed later. When the process is started, it is firstly determined in S200 whether or not a later-described skip image is stored in the skip image region 40a of the image determiner 40.

When it is determined in S200 that a skip image is stored in the skip image region 40a (S200: YES), the process moves to S210 and a command to start operation is supplied to the image determiner 40. Subsequently in S220, it is determined whether or not a control signal indicating detection of the same image as the skip image is supplied from the image determiner 40. If there is detection of the same image (S220: YES), the process moves to S230 and the skip time (e.g., 15 seconds) set in the EEPROM 58 is read to calculate a new address after skipping.

That is, a reproduction position (address of the VOBU being reproduced) is calculated based on the reproducing time at that point, time map information contained in the management information, and the skip time. An address of the VOBU which records prerecorded data the skip time ahead is further calculated.

Next in S240, the reproduction position of the prerecorded data being reproduced in the reproduction process is moved to the new address after skipping calculated in S230 so that the prerecorded data is read from the new address after skipping in the reproduction process, skipping the prerecorded data of a duration of the skip time.

On the other hand, when it is determined in S200 that the skip image is not stored in the skip image region 40a (S200: NO), and when it is determined in S220 that an image coinciding with the skip image is not detected (S220: NO), the process moves to S250.

It is determined in S250 whether or not a skip command is externally supplied via the operating unit 32. When a skip command is supplied (S250: YES), the process moves to S260 and an image (e.g., I-picture according to MPEG standards) a prescribed time ahead (e.g., 0.5 seconds ahead) of the reproducing time upon supply of the skip command is read to be stored as a skip image in the skip image region 40a of the image determiner 40. If the image determiner 40 is not operated, operation of the image determiner 40 is started.

The reason why an image a prescribed time ahead of the reproducing time upon supply of the skip command is read is because the user's input of the skip command is a prescribed time after the user views the image (that is to say, after the image is reproduced).

Next in S280, the predetermined skip time is read from the EEPROM 58 to calculate a new address after skipping in the same manner as in the step of S230. In subsequent S290, the reproduction position of the prerecorded data being reproduced in the reproduction process is moved ahead for the skip time. When the step of S290 is completed, the process moves to S200. When it is determined in S250 that a skip command is not supplied (S250: NO), the process moves to S200 to repeat the steps from S200.

The image region 40a of the image determiner 40 can store a plurality of skip images. The controller 50 stores a skip image in the skip image region 40a each time a skip command is supplied. In case that a plurality of skip images are stored in the region, the image determiner 40 determines whether or not any of the skip images coincides with the image stored in the buffer 34.

Also, when a command to stop the reproduction process, or a skip cancellation command to cancel a process to automatically skip an image to which a skip command is once applied is supplied via the operating unit 32, the controller 50 deletes the skip image stored in the skip image region 40a.

As explained above, in the recording and reproducing apparatus 1 of the first embodiment, when the skip command is supplied from the operating unit 32, the controller 50 extracts from the input image stored in the buffer 34 by the reproduction process an image a prescribed time ahead of the reproducing time at which the skip command was supplied, to store the extracted image as a skip image in the skip image region 40a of the image determiner 40.

Also, the controller 50 operates the image determiner 40 to determine whether or not there is an image, among the input images stored in the buffer 34 by the reproduction process, that coincides with the skip image, and detects the image that coincides with the skip image. When the image that coincides with the skip image is detected in the image determiner 40, a reading position (i.e., reproduction position) to read the image from the storage medium where the image that coincides with the skip image is detected is calculated, and moves the reproduction position of the prerecorded data to the reading position the skip time ahead, in the same manner as in the case in which the skip command is supplied via the operating unit 32.

Thus, according to the recording and reproducing apparatus 1 of the first embodiment, once a user supplies the skip command, the skip image is extracted from the prerecorded data displayed when the skip command was supplied, and stored in the skip image region 40a. When the image that coincides with this skip image is detected in the prerecorded data, the prerecorded data is skipped for the skip time so that the image is not to be displayed. Accordingly, without having the user repeatedly supply a skip command, it is possible to reproduce only the content desired by the user.

That is to say, for example when a commercial is displayed, once the user supplies a skip command to skip the commercial, the same commercial is no longer displayed thereafter. Thus, the user can view only the desired portion without burdensome operation that is to repeatedly supply a skip command.

Also, the skip time can be arbitrarily changed by operation of the operating unit 32. Thus, the user can inhibit only the undesired commercial from being reproduced by adjusting the skip time to a length of the commercial. The user can simply select the skip time from a plurality of alternatives via the operating unit 32. Thus, the user can easily change the skip time according to preference, which is convenient.

In the first embodiment, the recording and reproducing apparatus 1 corresponds to a reproducing apparatus of the present invention. The prerecorded data corresponds to the moving image information of the present invention. The HDD 14 and the DVD correspond to the storage medium of the present invention. The skip image region 40a of the image determiner 40 corresponds to the storage device of the present invention. The skip image corresponds to the feature parameter of the present invention. The skip time corresponds to the set time of the present invention. The skip time setting process corresponds to the time changing device of the present invention. The steps of S280 and S290 correspond to the reproduction control device of the present invention. The steps of S260 and S270 correspond to the first parameter storing device. The image determiner 40 and the steps of S220 and S230 correspond to the inhibition position specifying device of the present invention. The steps of S230 and S240 correspond to the reproduction inhibiting device of the present invention.

### [Second Embodiment]

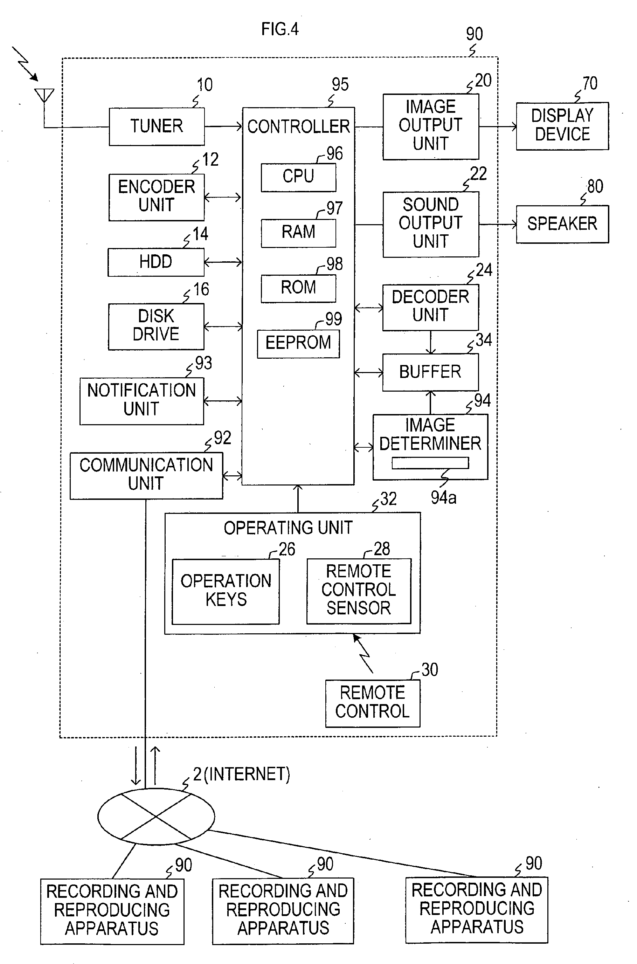

Now, explanation is given on a recording and reproducing apparatus 90 of a second embodiment and an information sharing system constituted of a plurality of the recording and reproducing apparatus 90. FIG. 4 is a schematic diagram showing a constitution of the overall information sharing system of the second embodiment.

As shown in FIG. 4, the information sharing system of the second embodiment is constituted of a plurality of the reproducing apparatus 90 which can intercommunicate via Internet 2.

The recording and reproducing apparatus 90 of the second embodiment 90 is substantially the same in constitution as the recording and reproducing apparatus 1 of the first embodiment. The recording and reproducing apparatus 90 of the second embodiment 90 is different from the recording and reproducing apparatus 1 of the first embodiment in that a communication unit 92 and a notification unit 93 are provided, and in operation of an image determiner 94 and part of the processes executed by a controller 95. Accordingly, in the following description, explanation will be given on only the portions that are different from the first embodiment and explanation on the same portion is not repeated.

The communication unit 92 is provided with various information necessary to communicate with other recording and reproducing apparatus 90 (hereinafter, also referred to as group members) configured to communicate with each other. The communication unit 92 is constituted so as to be able to communicate among the respective group members via Internet 2. The group members can be arbitrarily changed by supplying identification information, etc. of the other recording and reproducing apparatus 90 from the operating unit 32.

The notification unit 93 is made of a LED, which is lighted upon acquisition of a skip image from the other recording and reproducing apparatus 90. The skip image is image data stored in the image determiner 94 in a later-explained reproduction management process executed by the controller 95.

The image determiner 94 is provided with a rewritable region (hereinafter, also referred to as a skip image region 94a) which can store image data for a plurality of pictures. The skip image is stored in the skip image region 94a by the process executed in the controller 95, each skip image being added with a unique identification number.

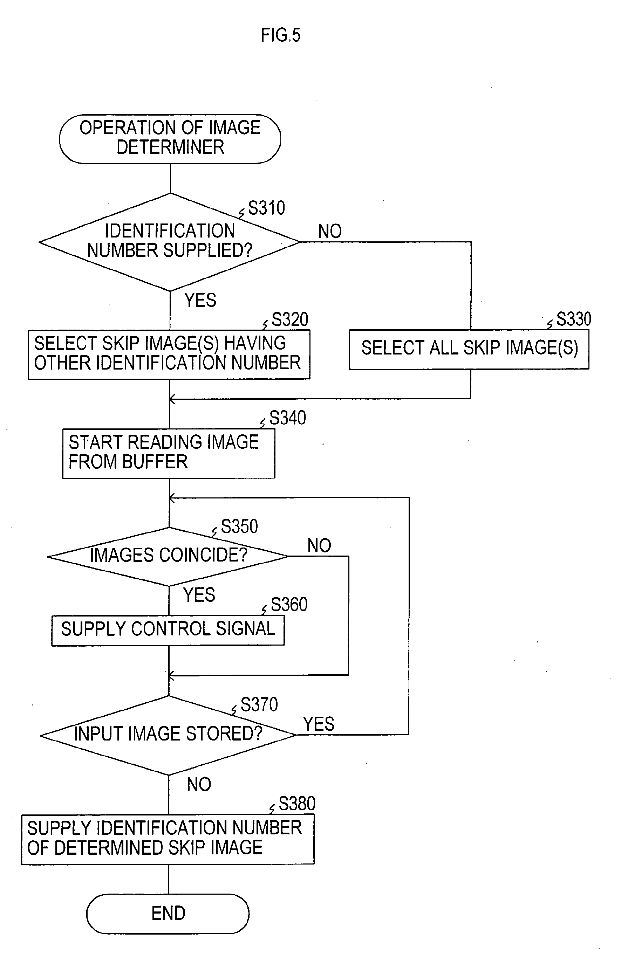

Now, explanation is given on operation of the image determiner 94 by way of a flowchart shown in FIG. 5. The overall image determiner 94 is actually made of circuits as hardware. Here, however, a flowchart is used for explanation, in order to facilitate understanding for operation of the image determiner 94. FIG. 5 is a flowchart for explaining the operation of the image determiner 94.

The image determiner 94 starts the operation when a command to start operation is supplied from the controller 95. It is determined in S310 whether or not the identification number of the skip image is supplied together with the start command. When the identification number of the skip image is supplied (S310: YES), the process moves to S320 and a skip image or images to which an identification number other than the supplied identification number is/are added is selected from the skip image region 94a as the skip image to be determined. The process moves to S340.

On the other hand, when it is determined in S310 that the identification number of the skip image is not supplied (S310: NO), the process moves to S330 and all the skip image(s) stored in the skip image region 94a is selected as the skip images to be determined. The process moves to S340.

In S340, reading of image data stored in a prescribed area of the buffer 34 (hereinafter, also referred to as an input image) is started. In S350, it is determined whether or not the input image coincides with the skip image(s) selected as the skip image(s) to be determined. Such determination is performed to all the skip image(s) selected in the steps of S320 and S330.

When it is determined in S350 that the input image coincides with the skip image (S350: YES), the process moves to S360 and a control signal indicating detection of an image that coincides with the skip image is supplied to the controller 95. The process moves to S370. On the other hand, when it is determined in S350 that the input image does not coincide with the skip image(s) (S350: NO), the process moves to S370.

It is determined in S370 whether or not there is a next input image. When there is no next input image (S370: NO), the process moves to S380 and the identification number of the determined skip image is transmitted to the controller 95. The process is ended. On the other hand, when it is determined in S370 that there is a next input image (S370: YES), the process moves to S350. The next input image is read and the steps from S350 are repeated.

The controller 95 is made of a known microcomputer including a CPU 96, a RAM 97, a ROM 98, a rewritable EEPROM 99, etc. The controller 95 is provided with a time measuring function to measure a current time and a reproducing time of prerecorded data. The CPU 96 executes various processes shown below based on programs stored in the RAM 97 and the ROM 98.

The EEPROM 99 prestores a time to make the reading position in the storage medium in the reproduction process (i.e., reproduction position) skip (hereinafter, also referred to a skip time) in response to a skip command supplied via the operating unit 32 during reproduction of prerecorded data. The skip time may be selected via the operating unit 32 in the same manner as in the first embodiment.

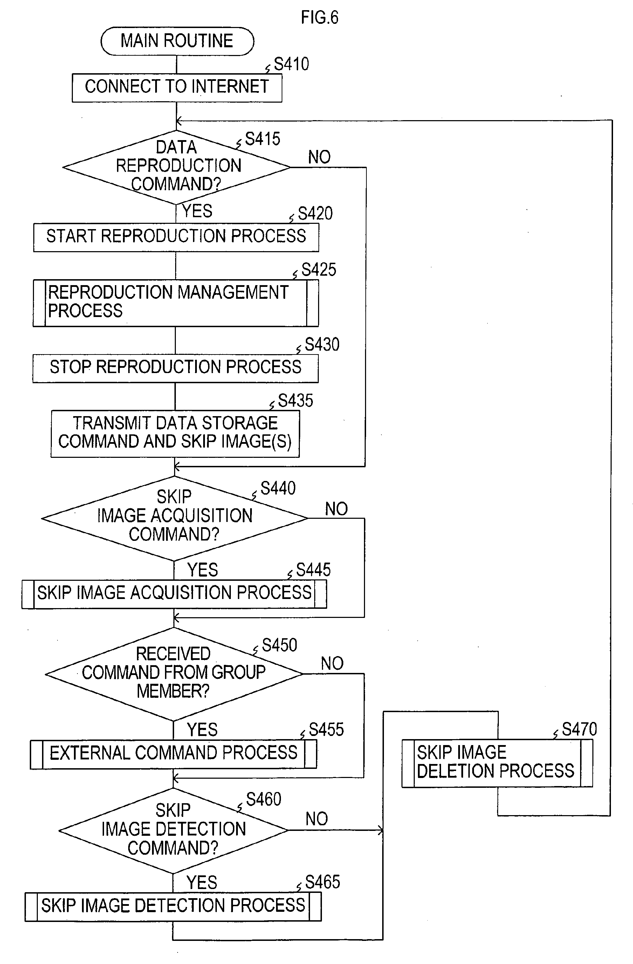

When the recording and reproducing apparatus 90 of the second embodiment is turned on, a main routine shown in FIG. 6 is executed in the controller 95. Based on a command externally supplied during execution of the main routine, various processes such as the recording process, the reproduction process of prerecorded data, etc. are executed in the same manner as in the first embodiment.

Hereinafter, explanation is given on the main routine executed in the controller 95 by way of FIG. 6. FIG. 6 is a flowchart illustrating the main routine executed by the CPU 96. Only the processes characteristic to the second embodiment are described in the main routine. Description on general processes executed according to commands supplied from the operating unit 32 (for example, recording process, various setting changes, etc.) is omitted.

When the process is started, the recording and reproducing apparatus 90 is firstly connected to Internet 2 via the communication unit 92 in S410. In subsequent S415, it is determined whether or not a reproduction command for prerecorded data is supplied via the operating unit 32.

When it is determined that there is a supply of a reproduction command (S415: YES), the process moves to S420 and the same reproduction process as in the first embodiment is started. In subsequent S425, a later-explained reproduction management process is executed. The reproduction process and the reproduction management process are executed in parallel. When the reproduction management process is ended, the process moves to S430 and the reproduction process is stopped. In subsequent S435, the skip image(s) stored in the image determiner 94 in the most recently executed reproduction management process is transmitted to the group members (that is to say, other recording and reproducing apparatus 90 that are intercommunicable) via the communication unit 92 together with a data storage command. The process moves to S440. On the other hand, when it is determined in S415 that there is no supply of a reproduction command (S415: NO), the process moves to S440.

Next in S440, it is determined whether or not a skip image acquisition command to obtain a skip image(s) from the group members is supplied via the operating unit 32. When it is determined that the skip image acquisition command is supplied (S440: YES), the process moves to S445 and a later-explained skip image acquisition process is executed. When the skip image acquisition process is ended, the process moves to S450. On the other hand, when it is determined in S440 that a skip image acquisition command is not supplied (S440: NO), the process moves to S450.

Next in S450, it is determined whether or not a command from the group member is received via the communication unit 92. When a command from the group member is received (S450: YES), the process moves to S455 and a later-described external command process is executed. When the external command process is ended, the process moves to S460. On the other hand, when it is determined in S450 that no command is received from the group member (S450: NO), the process moves to S460.

In S460, it is determined whether or not a skip image detection command to detect a skip image from the prerecorded data stored in the storage medium is supplied via the operating unit 32. When it is determined that the skip image detection command is supplied (S460: YES), the process moves to S465 and a later-described skip image detection process is executed. When the skip image detection process is ended, the process moves to S470. On the other hand, when it is determined in S460 that a skip image detection command is not supplied (S460: NO), the process moves to S470.

Next in S470, a later-described skip image deletion process is executed. When the skip image deletion process is ended, the process moves to S415 to repeat the steps from S415.

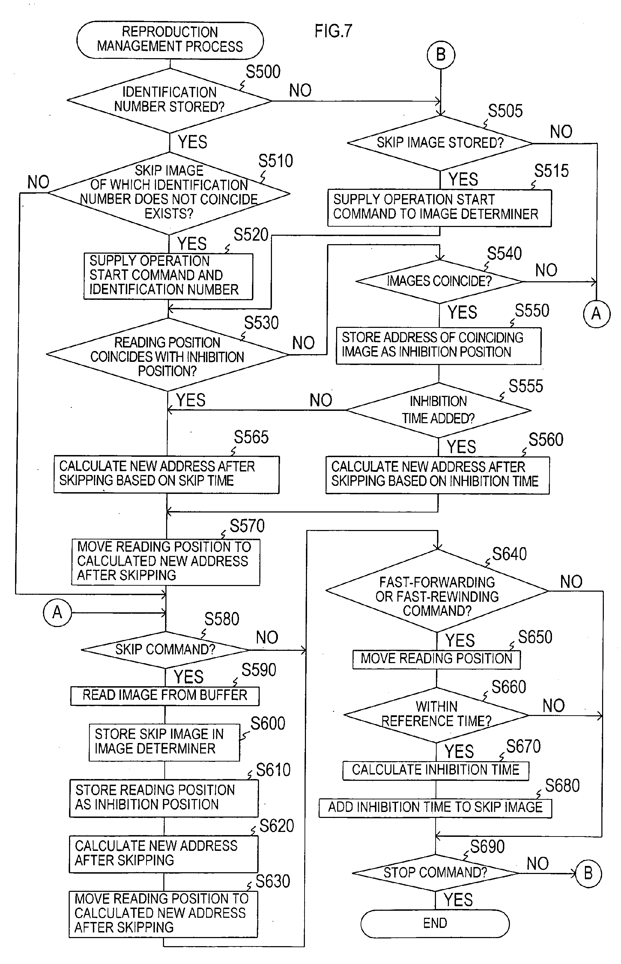

Now, explanation is given on the reproduction management process executed in S425 of the main routine by way of FIG. 7. FIG. 7 is a flowchart illustrating the reproduction management process executed in the controller 95.

When the process is started, it is determined firstly in S500 whether or not the identification number (stored in the later-described skip image detection process) of a skip image in connection with prerecorded data to which the reproduction process is started is stored in the EEPROM 99. If the identification number is stored (S500: YES), the process moves to S510. It is determined whether or not a skip image having an identification number which does not coincide with the identification number of the skip image is stored in the EEPROM 99, in the skip image region 94a of the image determiner 94. When it is determined that such a skip image is stored (S510: YES), the process moves to S520 and a command to start operation and the identification number of the skip image are supplied to the image determiner 94. The process moves to S530.

On the other hand, if it is determined in S500 that identification information of the skip image is not stored (S500: NO), the process moves to S505. It is determined whether or not there is a skip image stored in the skip image region 94a of the image determiner 94. When it is determined that a skip image is stored (S505: YES), the process moves to S515 and a command to start operation is supplied to the image determiner 94. The process moves to S530.

In S530, it is determined whether or not the reading position in the storage medium of the prerecorded data in the reproduction process, that is to say, the reproduction position, coincides with an inhibition position stored in the EEPROM 99. Here, the inhibition position is an address in the storage medium which, when it is determined that the image read from the storage medium coincides with the skip image, stores the coinciding image. The inhibition position is stored in the EEPROM 99 in a later-described process.

When it is determined that the reproduction position coincides with the inhibition position (S530: YES), the process moves to S565 and the skip time (e.g., 15 seconds) set in the EEPROM 99 is read to calculate a new address after skipping. The process moves to S570.

On the other hand, when it is determined that the reproduction position does not coincide with the inhibition position (S530: NO), the process moves to S540 and it is determined whether or not an image that coincides with the skip image is detected based on a control signal supplied from the image determiner 94. When the coinciding image is detected (S540: YES), the process moves to S550 and an address in the storage medium of the image detected as an image that coincides with the skip image is stored as the inhibition position in the EEPROM 99. The process moves to S555.

In S555, it is determined whether or not a later-described inhibition time is added to the skip image determined as coinciding. If the inhibition time is added (S555: YES), the process moves to S560 and a new address after skipping is calculated regarding the inhibition time as the skip time. The process moves to S570. On the other hand, when it is determined in S555 that the inhibition time is not added (S555: NO), the process moves to S565.

In S570, the reproduction position of the prerecorded data is moved to the new address after skipping calculated in S565 so that the prerecorded data is read from the new address after skipping in the reproduction process. Therefore, the prerecorded data of a duration of the skip time (hereinafter, also referred to as skip data) is skipped. The process moves to S580.

On the other hand, when it is determined in S510 that no skip image is stored with an identification number which does not coincide with the read identification number (S510: NO), when it is determined in S505 that the skip image is not stored (S505: NO), or when it is determined in S540 that no coinciding image is detected (S540: NO), the process moves to S580.

In S580, it is determined whether or not a skip command is externally supplied via the operating unit 32. When a skip command is supplied (S580: YES), the process moves to S590 and the image a prescribed time ahead (e.g., 0.5 seconds ahead) of the reproducing time upon supply of the skip command is extracted from the buffer 34. In subsequent S600, the extracted image is stored in the skip image region 94a of the image determiner 94 as a skip image. The skip image is stored with the current time upon storage (hereinafter, referred to as a storage time). Also, when the image determiner 94 is not operated upon storage of the skip image, operation of the image determiner 94 is started.

Next in S610, the address or addresses in the storage medium storing the image stored as a skip image(s) is/are stored in the EEPROM 99 as an inhibition position or inhibition positions. In subsequent S620, the skip time preset in the EEPROM 99 is read to calculate a new address after skipping. The process moves to S630. In S630, the reproduction position of the prerecorded data is moved ahead for the skip time. The process moves to S640. On the other hand, when it is determined in S580 that a skip command is not supplied (S580: NO), the process moves to S640.

In S640, it is determined whether or not a command to fast-forward or fast-rewind the image displayed on the display device 70 is supplied via the operating unit 32. If such a command is supplied (S640: YES), the process moves to S650 and the reproduction position of the prerecorded data is moved and the image displayed on the display device 70 is fast-forwarded or fast-rewound according to the supplied command. The process moves to S660.

In S660, it is determined whether a fast-forwarding or fast-rewinding command is supplied within a predetermined reference time (e.g., 5 seconds) since supply of the skip command. When it is determined that a fast-forwarding or fast-rewinding command is supplied within the reference time (S660: YES), the process moves to S670 and an inhibition time is calculated based on the skip time and the fast-forwarded or fast-rewound time.

For example, given that the skip time is set for 30 seconds, if a fast-rewinding command is supplied within the reference time after skipping and there is fast-rewinding for 5 seconds, a difference between the skip time (30 seconds) and the fast-rewound time (5 seconds), that is to say, 25 seconds, is calculated as the inhibition time. Also for example, when a fast-forwarding command is supplied within the reference time after skipping and there is fast-forwarding for 10 seconds, a sum of the skip time (30 seconds) and the fast-forwarded time (10 seconds), that is to say, 40 seconds, is calculated as the inhibition time.

When the inhibition time is calculated in S670, the process moves to S680 and the calculated inhibition time is added to the skip image stored in the image determiner 94 based on the skip command. That is to say, in case that the skip time is adjusted by a fast-forwarding or fast-rewinding command after the reproduction position is moved by the skip time based on the skip command, the reproduction position is made to skip for the adjusted skip time (i.e., an inhibition time) when an image coinciding with the skip image is later detected and the coinciding image is skipped.

In subsequent S690, it is determined whether or not a stop command for the reproduction process is supplied via the operating unit 32. When a stop command is supplied (S690: YES), the present process is ended. On the other hand, if it is determined that a stop command is not supplied (S690: NO), the process moves to S505 to repeat the steps from S505.

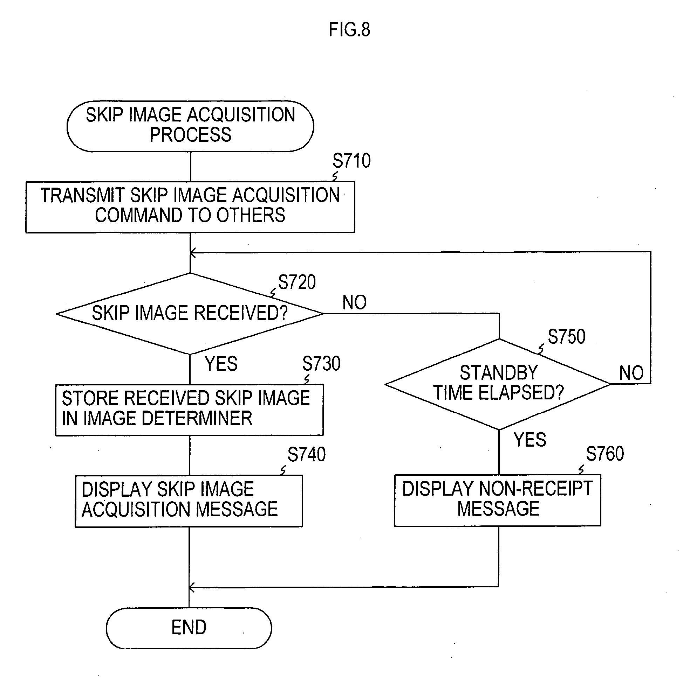

Now, explanation is given on the skip image acquisition process executed in S445 of the main routine by way of FIG. 8. FIG. 8 is a flowchart illustrating the skip image acquisition process executed in the controller 95.

When the process is started, a skip image acquisition command to transmit a skip image(s) to the recording and reproducing apparatus 90 is transmitted firstly via the communication unit 92 in S710 to other recording and reproducing apparatus 90, that is to say, the group members, preset to perform communication. In subsequent S720, it is determined whether or not a skip image(s) transmitted from the group members is received. When it is determined that a skip image(s) is obtained (S720: YES), the process moves to S730 to store the received skip image(s) in the skip image region 94a of the skip determiner 94.

In subsequent S740, a message indicating that a skip image(s) is obtained from the group members (e.g., "Skip image was successfully obtained.") is displayed on the display device 70. The present process is ended.

On the other hand, when it is determined that no skip image is received (S720: NO), the process moves to S750 to determine whether or not a predetermined standby time has elapsed. When the standby time has not elapsed (S750: NO), the process moves to S720 to repeat the step of S720. Also, when it is determined in S750 that the standby time has elapsed (S750: YES), the process moves to S760 and a message indicating that no skip image can be obtained from the group members (e.g., "Skip image could not be obtained") is displayed. The present process is ended.

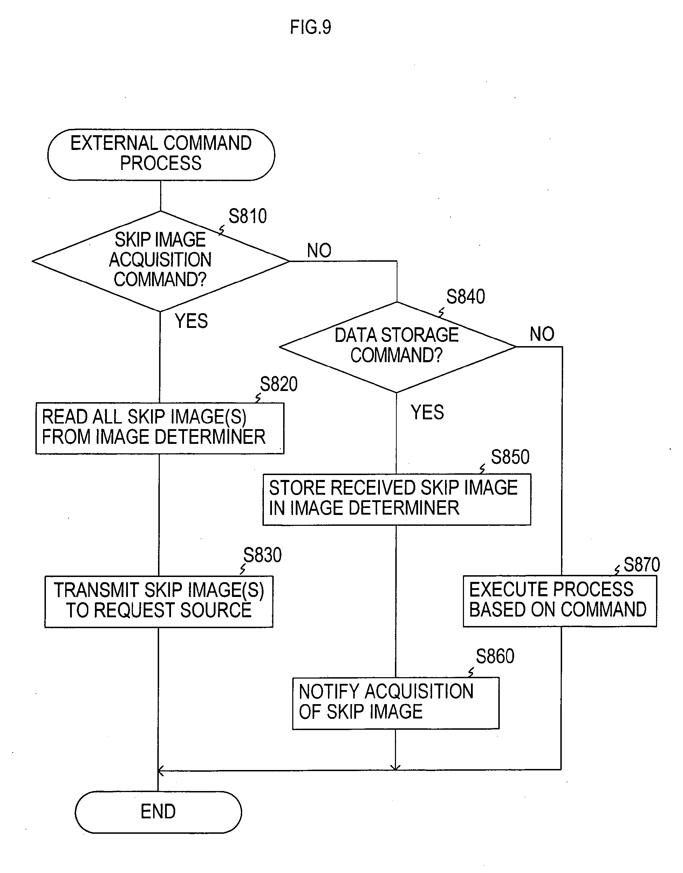

Now, explanation is given on the external command process executed in S455 of the main routine by way of FIG. 9. FIG. 9 is a flowchart illustrating the external command process executed in the controller 95.

When the process is started, it is firstly determined in S810 whether or not a command supplied via the communication unit 92 is a skip image acquisition command from the group member. If the command is a skip image acquisition command (S810: YES), the process moves to S820 to read all the skip image(s) from the skip image region 94a of the image determiner 94. In subsequent S830, the skip image(s) is transmitted to the group member of a request source, that is to say, the recording and reproducing apparatus 90 which has supplied the skip image acquisition command. The present process is ended.

On the other hand, when it is determined in S810 that the supplied command is not a skip image acquisition command (S810: NO), the process moves to S840 and it is determined whether or not the command supplied via the communication unit 92 is a data storage command. If the supplied command is the data storage command (S840: YES), the process moves to S850 and the skip image(s) supplied with the data storage command is stored in the skip image region 94a of the image determiner 94. In subsequent S860, notification that the skip image(s) is obtained from the other recording and reproducing apparatus 90 is made by lighting the notification unit 93. The present process is ended.

The notification unit 93 is designed to be turned off when the operating unit 32 is operated. This is because the external command process is not a process started by a command from a user, so the notification unit 93 may not be lighted while the recording and reproducing apparatus 90 is used by the user. Therefore, in the second embodiment, lighting of the notification unit 93 is continued until the operating unit 32 is operated, and, when the operating unit 32 is operated, that is to say, when the recording and reproducing apparatus 90 is used by the user, so it is confirmed that lighting of the notification unit 93 is acknowledged by the user, the notification unit 93 is turned off.

On the other hand, when it is determined in S840 that a command supplied via the communication unit 92 is not a data storage command (S840: NO), the process moves to S870 to properly execute various processes according to the supplied command. The present process is ended.

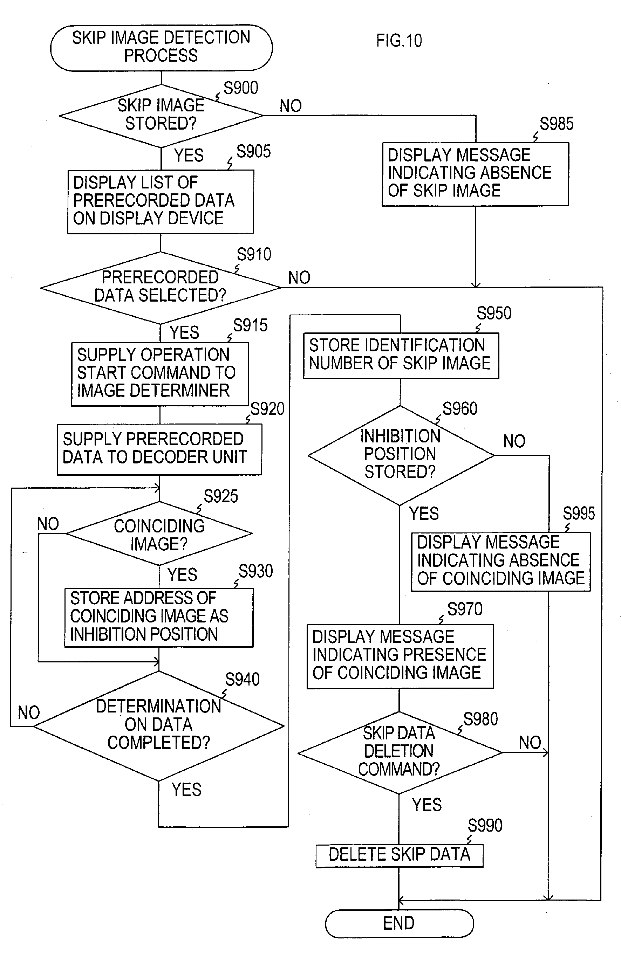

Now, explanation is given on the skip image detection process executed in S465 of the main routine by way of FIG. 10. FIG. 10 is a flowchart illustrating the skip image detection process executed in the controller 95.

When the process is started, it is firstly determined in S900 whether or not there is a skip image(s) stored in the skip image region 94a of the image determiner 94. When a skip image(s) is stored (S900: YES), the process moves to S905 and management information stored in the storage medium such as the HDD 14 and a DVD, etc. is read. Based on the read management information, a list of the prerecorded data stored in the storage medium is displayed on the display device 70.

Next in subsequent S910, it is determined whether or not the prerecorded data is selected via the operating unit 32. When it is determined that the prerecorded data is selected (S910: YES), the process moves to S915 to supply a start command to start operation of the image determiner 94.

On the other hand, when it is determined in S900 that no skip image is stored (S900: NO), the process move to S985 and a message indicating that no skip image is stored in the skip image region 94a (e.g., "No skip image is registered", etc.) is displayed on the display device 70. The present process is ended. Also, when it is determined in S910 that there is no command to select prerecorded data (S910: NO), the present process is ended.

Next in S920, the selected prerecorded data is read from reproduction information stored in the storage medium and supplied to the decoder unit 24. In subsequent S925, it is determined whether or not an image that coincides with the skip image is detected based on a control signal supplied from the image determiner 94.

When the coinciding image is detected (S925: YES), the process moves to S930 and an address in the storage medium storing the image detected as the image that coincides with the skip image is stored as an inhibition position. The process moves to S940. On the other hand, if an image that coincides with the skip image is not detected (S925: NO), the process moves to S940.

In S940, it is determined whether or not determination is performed to all the supplied images composing the selected prerecorded data. When it is determined that determination is not performed to all the supplied images (S940: NO), the process moves to S925 to repeat the steps from S925. On the other hand, when it is determined that determination to all the supplied images is performed (S940: YES), the process moves to S950 and the identification number of the skip image with which determination is performed in association with the prerecorded data to which determination is performed is stored in the EEPROM 99.

Next in S960, it is determined whether or not there is an inhibition position stored in the EEPROM 99 in the step of S930. If there is an inhibition position (S960: YES), the process moves to S970 and a message indicating that an image that coincides with the skip image was detected (e.g., "There is an image that coincides with the skip image", etc.) is displayed on the display device 70. In subsequent S980, it is determined whether or not a skip data deletion command to delete the prerecorded data for the skip time including an image which coincides with the skip image is supplied via the operating unit 32.

When a skip data deletion command is supplied (S980: YES), the process moves to S990 and an address of the image after the skip time from the skip image stored in the inhibition position is calculated based on the inhibition position and the skip time. The prerecorded data between the inhibition position and the calculated address (that is to say, the aforementioned skip data) is deleted from the prerecorded data, and the inhibition position stored in the EEPROM 99 is deleted. The present process is ended.

On the other hand, when it is determined in S960 that there is no inhibition position (S960: NO), the process moves to S995 and a message indicating that no image that coincides with the skip image is detected (e.g., "There is no image that coincides with the skip image", etc.) is displayed on the display device 70. The present process is ended. Also, when there is no supply of a skip data deletion command in S980 (S980: NO), the present process is ended.

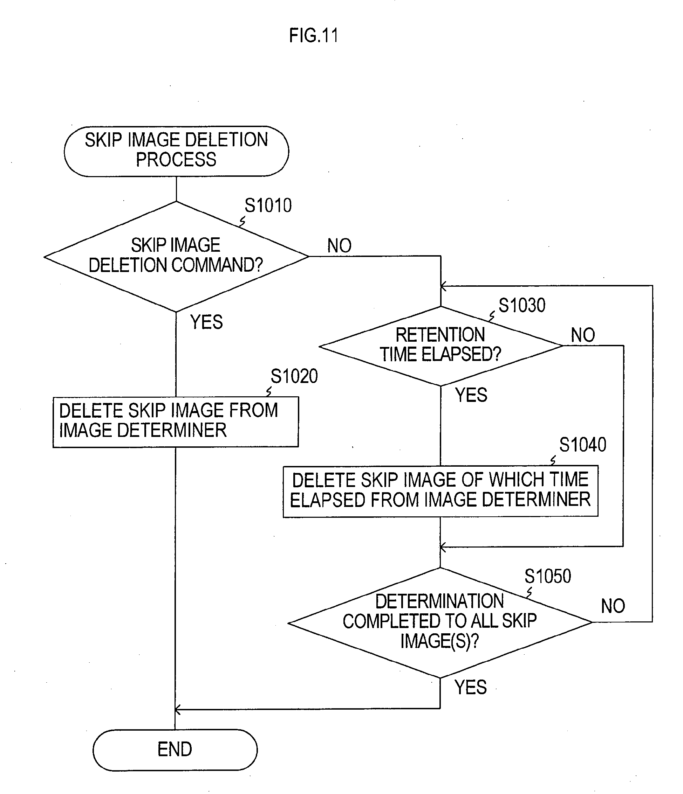

Now, explanation is given on the skip image deletion process executed in S470 of the main routine by way of FIG. 11. FIG. 11 is a flowchart illustrating the skip image deletion process executed in the controller 95.

When the process is started, it is firstly determined in S1010 whether or not a skip image deletion command to delete the skip image stored in the skip image region 94a of the image determiner 94 is supplied via the operating unit 32. When it is determined that a skip image deletion command is supplied via the operating unit 32 (S1010: YES), the process moves to S1020 and all the skip images stored in the skip image region 94a are deleted. The present process is ended.

On the other hand, if it is determined in S1010 that a skip image deletion command is not supplied (S1010: NO), the process moves to S1030 and one of the skip images stored in the skip image region 94a is extracted and, based on the storage time stored with the skip image and the current time, it is determined whether or not a retention time has elapsed which is preset as a time to retain the skip image since storage of this skip image. When it is determined that the retention time has elapsed (S1030: YES), the process moves to S1040 to delete the skip image from the skip image region 94a. The process moves to S1050. On the other hand, when it is determined that the retention time has not elapsed (S1030: NO), the process moves to S1050.

Next in S1050, it is determined whether or not determination on whether or not the retention time has elapsed is executed to all the skip image(s) stored in the skip image region 94a. When determination to all the skip image(s) is not completed (S1050: NO), the process moves to S1030 to repeat the steps from S1030. On the other hand, if it is determined that determination to all the skip image(s) is completed (S1050: YES), the present process is ended.

As explained above, in the recording and reproducing apparatus of the second embodiment, when a skip command is supplied from the operating unit 32, the controller 95 reads an image a prescribed time ahead of the reproducing time upon supply of a skip command, from the prerecorded data being reproduced by the reproduction process, that is to say, from the input image stored in the buffer 34. The controller 95 then stores the read image in the skip image region 94a of the image determiner 94 as a skip image.

Also, the controller 95 makes the image determiner 94 operate during execution of the reproduction process to determine whether or not the input image stored in the buffer 34 coincides with the skip image, and specify an address in the storage medium of the image determined to coincide with the skip image as an inhibition position. Based on the detected inhibition position and the skip time, a new address after skipping is calculated and the reproduction position of the prerecorded data is moved to the new address after skipping.

Thus, according to the recording and reproducing apparatus 90 of the second embodiment, once the user supplies a skip command, the prerecorded data is skipped for the skip time so that, when an image that coincides with an image displayed upon supply of the skip image is detected from the prerecorded data being reproduced, the image is no longer displayed. Therefore, without necessity for a user to repeatedly supply a skip command, only the content the user desires can be reproduced.

That is, for example if a user supplies a skip command to skip a commercial when the commercial is displayed, the same commercial is no longer displayed thereafter. Thus, the user can only view the desired portion without bothersome operation of repeatedly supplying a skip command.

Furthermore, since determination on whether or not the input image coincides with the skip image is executed in parallel with the reproduction process to specify the inhibition position during reproduction of the prerecorded data, the user can view the prerecorded data, skipping the portion which coincides with the once skipped skip data immediately after the skip command is supplied.

Also, the controller 95 stores in the EEPROM 99 as the inhibition positions the address in the storage medium of the image which coincides with the skip image and the address in the storage medium of the image being reproduced upon supply of the skip command. Thus, the user can easily see the address of the once skipped skip data and the address in the storage medium of the prerecorded data that coincides with the skip data.

Moreover, the controller 95 performs the skip image detection process in accordance with a skip image detection command supplied from the operating unit 32. That is, in accordance with a command from the operating unit 32, the controller 95 reads the prerecorded data which is not being reproduced, to be supplied to the buffer 34 via the decoder unit 24. Also, the image determiner 94 is operated to determine whether the input image supplied to the buffer 34 coincides with the skip image. The address in the storage medium of the image determined to coincide with the skip image is stored in the EEPROM 99 as an inhibition position.

In the image determiner 94, when it is determined whether or not the input image (that is to say, the image data supplied to the buffer 34 by reading of the prerecorded data) coincides with the skip image, determination is performed only with the skip image with which determination is not yet performed to the prerecorded data. Thus, as compared to the case in which determination is performed to all the skip image(s) upon reproduction of the prerecorded data, processing loads can be reduced.

Also, the controller 95 skips the prerecorded data for the skip time which includes the inhibition position, that is to say, the skip data, during reproduction of the prerecorded data. When a deletion command for the skip data is supplied via the operating unit 32 when the prerecorded data is not being reproduced, the prerecorded data for the skip time which includes the image stored at the inhibition position is deleted from the prerecorded data stored in the storage medium, based on the inhibition position stored in the EEPROM 99 and the skip time.

Accordingly, the user can delete the skip data once skipped by the user and the prerecorded data that coincides with the skip data, by supplying a deletion command for the skip data. Thus, the user can view only the desired content without supplying a skip command thereafter when viewing the prerecorded data. Also, the skip data in prerecorded data which is once skipped upon viewing can be deleted from unviewed prerecorded data stored in the storage medium. Accordingly, the user can view only the desired content of prerecorded data even to be viewed for the first time without supply of a skip command.

Moreover, when a command to fast-forward or fast-rewind an image displayed on the display device 70 is supplied from the operating unit 32, the controller 95 moves the reproduction position by the reproduction process based on the supplied command. Also, if this command is supplied within a predetermined reference time after the reproduction position is moved based on the skip command, an inhibition time to inhibit reproduction of the prerecorded data is calculated based on the moving amount of the reproduction position based on the fast-forwarding or fast-rewinding command and the skip time. The calculated inhibition time is added to the skip image stored upon supply of the skip command. The controller 95 calculates a new address after skipping based on the inhibition time when the inhibition time is added to the skip image.

Thus, according to the recording and reproducing apparatus of the second embodiment, the time of the prerecorded data actually skipped by the user based on the fast-forwarding or fast-rewinding command is calculated as the inhibition time. Based on the inhibition time, the prerecorded data is skipped. Thus, the prerecorded data undesired by the user can be more accurately skipped.

Also, the controller 95 executes the skip image deletion process. The controller 95 deletes a skip image when a skip image deletion command is supplied from the operating unit 32, and automatically deletes a skip image of which predetermined retention time has elapsed since storage in the skip image region 94a. Thus, the skip image region 94a can avoid exceeding its capacity due to storage of a huge amount of skip images in the skip image region 94a.

Also, the recording and reproducing apparatus 90 of the second embodiment constitutes an information sharing system together with a plurality of other recording and reproducing apparatus 90. Each of the recording and reproducing apparatus 90 is provided with the communication unit 92. Each of the recording and reproducing apparatus 90 is constituted to be communicable with the plurality of other recording and reproducing apparatus 90 belonging to the information sharing system (group members). Thus, each of the recording and reproducing apparatus 90 can share the skip image (s).

For example, when a skip image acquisition command is supplied from the operating unit 32, each of the recording and reproducing apparatus 90 obtains the skip image(s) from other recording and reproducing apparatus 90 via the communication unit 92 to store the obtained image(s) in the skip image region 94a of the image determiner 94. Accordingly, based on the skip image(s) obtained from the other recording and reproducing apparatus 90, each of the recording and reproducing apparatus 90 can skip the prerecorded data which includes the image(s) that coincides with the skip image(s).

Also, after completion of the reproduction process, the skip image(s) stored in the skip image region 94a in the reproduction process is transmitted to the group members together with a data storage command. Thus, it is possible to inhibit the skip data skipped by supply of a skip command with the single recording and reproducing apparatus 90 from being reproduced in the other recording and reproducing apparatus 90.

In the second embodiment, the recording and reproducing apparatus 90 corresponds to the reproducing apparatus of the present invention. The skip image region 94a of the image determiner 94 and the EEPROM 99 correspond to the storage device of the present invention. The communication unit 92 corresponds to the communication device of the present invention. The fast-forwarding or fast-rewinding command corresponds to the move command of the present invention. The image storage command corresponds to the skip image acquisition command and the data storage command of the present invention. The steps of S580 and S620 to S650 correspond to the reproduction control device of the present invention. The steps from S580 to S600 and S680 correspond to the first parameter storing device. The image determiner 94 and the steps from S515 to S550 and S610 correspond to the first inhibition position specifying device of the present invention. The image determiner 94 and the steps from S915 to S940 correspond to the second inhibition position specifying device of the present invention. The steps from S555 to S570 correspond to the reproduction inhibition device of the present invention. The steps of S980 and S990 correspond to the moving image information editing device of the present invention. The steps of S660 and S670 correspond to the time calculation device of the present invention. The steps of S440, S445 (skip image acquisition process), S840 and S850 correspond to the second parameter storage device of the present invention. The step of S435 corresponds to the image transmitting device of the present invention. The step of S470 (skip image deletion process) corresponds to the deletion device of the present invention.

The embodiments of the present invention are described in the above. However, it goes without saying that the present invention can take various modes.

In the above embodiments, when a recording command is supplied from the operating unit 32, a television broadcast signal of a specified channel is extracted from the television broadcast signals received by an antenna to record the extracted television broadcast signal in the HDD 14 or a DVD, etc. However, programs of a certain channel may be recorded in a storage medium at all time.

Also, programs of all the channels based on television broadcast signals receivable by an antenna may be sequentially recorded on a storage medium at all time so as to be stored in the storage medium for a prescribed time. Then, each of the above processes may be executed to the prerecorded data of all the channels for the prescribed time.

In the above embodiment, a piece of image data is extracted as a feature parameter of the present invention (image information described in claim 11), and the extracted image data is stored as a skip image. Thereafter, determination on whether or not the extracted skip image coincides with an input image is performed to specify the inhibition position storing prerecorded data to be skipped.

However, the feature parameter may not be limited to one piece of image data, and can be a plurality of successive image data. The inhibition position may be specified by such successive image data. In this case, each of all the successive image data does not need to coincide with the input data. Pixels in prescribed positions may be extracted from each of the successive image data. In comparison of changing patterns of these pixels, determination may be made on whether or not the images coincide with each other.

The feature parameter may be sound information for a prescribed time. The inhibition position may be specified by determining whether or not sound information coincide with each other.

In the above embodiment, the reading position storing prerecorded data to be skipped is specified as a result that a skip image coincides with an input image. However, the reading position may be specified by the fact that part of the skip image is contained in the input image.

That is, the reading position storing prerecorded data to be skipped may be specified as a result that the images coincide with each other, for example in half or one fourth of the images. Also, for example in case that the skip image includes a prescribed image pattern showing a logo, etc. of a company, an entity or the like, the inhibition position may be specified by detecting this image pattern as a skip image due to inclusion of an image pattern coinciding with the prescribed image pattern. In this way, for example even in the case of a commercial which is not totally the same, it is possible not to reproduce a commercial of a specific company, entity or the like containing the same logo.

In the second embodiment, in response to a skip image detection command externally supplied, the commanded prerecorded data is read to specify the inhibition position. However, when prerecorded data is newly recorded in the storage medium, determination to newly recorded prerecorded data on whether or not the input image coincides with a skip image may be made to automatically specify the inhibition position. Upon reproduction of the prerecorded data, the prerecorded data for a prescribed time after the inhibition position may be skipped.

In the second embodiment, the prerecorded data for the skip time which includes the inhibition position is deleted when a deletion command for the skip data is externally supplied. However, the skip data may be automatically deleted immediately after the inhibition position is detected or in intervals of a predetermined prescribed time.

In the above embodiments, the skip image is deleted from the image determiner 40 when a deletion command for the skip image is externally supplied or when the retention time has elapsed since storage of the skip image. However, the skip image may be automatically deleted, for example based on frequency of use of the skip image, that is to say, the number of times the inhibition position is specified based on the skip image within a prescribed time, etc.

In the above second embodiments, a plurality of the recording and reproducing apparatus 90 configured to intercommunicate, that is to say; the group members, can transmit and receive a skip image(s) to and from each other. However, only one of the plurality of the recording and reproducing apparatus 90 (hereinafter, also referred to as a parent apparatus) may be configured to transmit a skip image(s) to the other recording and reproducing apparatus 90 (hereinafter, also referred to as children apparatus), and the skip image(s) stored in the skip image region 94a of the parent apparatus may be transmitted to the children apparatus at all times and stored as the skip image(s) of the children apparatus. In this manner, the prerecorded data skipped by supply of a skip command in the parent apparatus can be automatically skipped or deleted in the children apparatus as well. The parent apparatus can manage the prerecorded data capable of being reproduced in the children apparatus.

In the above embodiments, the skip time is selected from a plurality of options. However, desired time may be supplied per unit of second by means of buttons on the remote 30.

In the above embodiments, the reproducing apparatus of the present invention is introduced as a recording and reproducing apparatus which can record prerecorded data on a storage medium. However, the reproducing apparatus of the present invention may simply be an apparatus which only reproduces prerecorded data prerecorded on a storage medium like a DVD, etc. (e.g., a DVD player). Also, the recording and reproducing apparatus of the above embodiments may be included in a personal computer. In this case, a monitor of the personal computer may be used as the display device 70.

In the above embodiments, the recording and reproducing apparatus can record prerecorded data on the HDD 14 and a DVD. However, the storage medium on which prerecorded data is recorded may be one of a HDD and a DVD. Also, the storage medium is not limited to a HDD and a DVD, and may be any types of multimedia optical disk, as long as prerecorded data having picture data and sound data can be stored. The format of conversion of a broadcast signal to prerecorded data upon recording onto a storage medium is not limited to the MPEG format. As to the recording format after conversion as well, various types of formats may be employed as long as such formats permit rewriting and deletion of part of the data.

In each of the above embodiments, the skip image region 40a, 94a to store the skip image(s) is provided in the image determiner 40, 94. However, the skip image(s) may be stored in other storage region of the HDD 14, etc.

The recording and reproducing apparatus in the above embodiments receives television broadcast signals (analog television broadcast signals or digital television broadcast signals) via an antenna to record the signals on a storage medium. However, the transmission mode for the television broadcast signals is not limited to radiowave. Broadcast signals may be received via a CATV using a coaxial cable or an optical cable, or Internet broadcast using a telephone line, etc. Also, the recording and reproducing apparatus may be provided with a DV terminal, and prerecorded data may be obtained via the DV terminal.

## Claims

1. A reproducing apparatus comprising: a reproducing device that reads moving image information containing images and sounds from a storage medium storing the moving image information, decompresses signals which can be reproduced as images and sounds in the moving image information, and reproduces the decompressed signal; a reproduction control device that moves a reproduction position, that is a reading position in the storage medium of the reproducing device, to a reading position storing the moving image information a predetermined set time ahead, in response to a skip command externally supplied during reproduction of the moving image information by the reproducing device; a first parameter storing device that, in response to the externally supplied skip command, extracts a feature parameter of image or sound from the moving image information being reproduced by the reproducing device upon supply of the skip command, and stores the extracted feature parameter in a storage device; an inhibition position specifying device that detects a feature parameter coinciding with the feature parameter stored in the storage device by the first parameter storing device, from the moving image information stored in the storage medium, and specifies a reading position in the storage medium where the coinciding feature parameter is detected, as an inhibition position; and a reproduction inhibiting device that inhibits reproduction by the reproducing device of the moving image information for the set time which contains the feature parameter, based on the inhibition position specified by the inhibition position specifying device.

2. The reproducing apparatus according to claim 1 wherein the reproduction inhibiting device outputs the skip command to the reproduction control device when the reproduction position by the reproducing device of the moving image information coincides with the inhibition position, so as to inhibit reproduction of the moving image information for the set time.

3. The reproducing apparatus according to claim 1 wherein the reproduction inhibiting device deletes the moving image information for the set time which contains the feature parameter, from the moving image information stored in the storage medium, based on the inhibition position and the set time.

4. The reproducing apparatus according to one of claims 1 to 3 comprising: a first inhibition position specifying device, as the inhibition position specifying device, that detects the feature parameter coinciding with the feature parameter stored in the storage device by the first parameter storing device from the moving image information being reproduced, to specify the inhibition position.

5. The reproducing apparatus according to claim 4 wherein the first inhibition position specifying device stores the specified inhibition position in the storage device, and further stores a reading position in the storage medium of the feature parameter extracted by the first parameter storing device as the inhibition position in the storage device.

6. The reproducing apparatus according to claim 4 or 5 comprising: a second inhibition position specifying device, as the inhibition position specifying device, in addition to the first inhibition position specifying device, that detects the feature parameter coinciding with the feature parameter stored in the storage device by the first parameter storing device, from the moving image information stored in the storage medium and not being reproduced by the reproducing device, to specify the inhibition position, and then stores the specified inhibition position in the storage medium, wherein the first inhibition position specifying device performs detection only to the feature parameters to which detection of the feature parameter coinciding with the feature parameter stored in the storage device is not performed by the second inhibition position specifying device.

7. The reproducing apparatus according to one of claims 1 to 5, further comprising: a second inhibition position specifying device, as the inhibition position specifying device, in addition to the first inhibition position specifying device, that detects a feature parameter coinciding with the feature parameter stored in the storage device by the first parameter storing device, from the moving image information stored in the storage medium and not being reproduced by the reproducing device, to specify the inhibition position, and then stores the specified inhibition position in the storage medium.

8. The reproducing apparatus according to claim 7 wherein the reproduction inhibiting device deletes the moving image information for the set time which contains the feature parameter from the moving image information stored in the storage medium based on the inhibition position and the set time, when the inhibition position is stored by the second inhibition position specifying device.

9. The reproducing apparatus according to claim 2, wherein the inhibition position specifying device stores the detected inhibition position in the storage device, and also stores a reading position in the storage medium of the feature parameter stored by the first parameter storing device as the inhibition position in the storage device, and the reproducing apparatus further comprises a moving image information editing device that deletes the moving image information for the set time which contains the feature parameter from the moving image information stored in the storage medium based on the inhibition position stored in the storage device by the inhibition position specifying device and the set time.

10. The reproducing apparatus according to one of claims 1 to 9, wherein the reproduction control device moves the reproduction position in accordance with a moving command externally supplied during reproduction of the moving image information by the reproducing device, the reproducing apparatus further comprises a time calculation device that, when the reproduction control device moves the reproduction position in response to the skip command and then moves the reproduction position in response to the moving command within a predetermined reference time, calculates an inhibition time for which reproduction of the moving image information is inhibited, based on a moving amount of the reproduction position by the reproduction control device and the set time, the first parameter storing device, when the inhibition time is calculated by the time calculation device, stores the inhibition time calculated by the time calculation device together with the feature parameter in the storage device, and the reproduction inhibiting device, in case that the inhibition time is stored together with the feature parameter, inhibits reproduction by the reproducing device of the moving image information for the inhibition time, instead of for the set time.

11. The reproducing apparatus according to one of claims 1 to 10 wherein the feature parameter is image information which constitutes the moving image information.

12. The reproducing apparatus according to one of claims 1 to 10 wherein the feature parameter is a series of a plurality of image information which constitute the moving image information.

13. The reproducing apparatus according to claim 11 or 12, wherein as a result that part of the image information coincides with part of the image information stored as the feature parameter, the inhibition position specifying device detects the image information, part of which coincides with part of the image information stored as the feature parameter, as the feature parameter.

14. The reproducing apparatus according to one of claims 1 to 10, wherein the feature parameter is sound information for a prescribed time which constitutes the moving image information.

15. The reproducing apparatus according to one of claims 1 to 14 comprising: a deletion device that deletes the feature parameter stored in the storage device.

16. The reproducing apparatus according to one of claims 1 to 15 comprising: a time changing device that changes the set time in response to a command externally supplied.

17. The reproducing apparatus according to claim 16, wherein the time changing device includes a plurality of time options in advance and is capable of selecting one of the plurality of time options according to a command externally supplied.

18. The reproducing apparatus according to claims 1 to 17 comprising: a communication device that communicates with external apparatus; and a second parameter storing device that obtains image information or sound information from the external apparatus via the communication device, and stores the obtained information in the storage device as the feature parameter, when an image storage command to store an image in the storage device is externally supplied.

19. An information sharing system comprising a plurality of reproducing apparatus set forth in claim 18, each of the plurality of reproducing apparatus being capable of communicating with each other via the communication device of each reproducing apparatus, wherein at least one of the plurality of reproducing apparatus includes an image transmitting device that transmits the feature parameter stored in the storage device to at least one of the other reproducing apparatus belonging to the information communication system via the communication device together with the image storage command.
